# EUROPEAN PATENT SPECIFICATION

(11) **EP 1 022 171 B1**
(45) Date of publication and mention of the grant of the patent: **09.08.2006**
(21) Application number: 00200138.6
(22) Date of filing: 13.01.2000
(51) Int. Cl.: B60H 1/32

(54) **A vehicle comprising several refrigerated load compartments**
Fahrzeug mit mehreren gekühlten Laderäumen
Véhicule comprenant plusieurs compartiments de charge réfrigérés

(30) Priority: 21.01.1999 NL 1011108
(43) Date of publication of application: 26.07.2000
(73) Proprietor: TRS Transportkoeling B.V., 1431 GG Aalsmeer (NL)
(72) Inventor: Kool, Eeuwe Durk, 2202 AP Noordwijk (NL)
(74) Representative: Hooiveld, Arjen Jan Winfried

(56) References cited:
- US-A- 5 333 678
- US-A- 5 389 035
- PATENT ABSTRACTS OF JAPAN vol. 011, no. 048 (M-561), 13 February 1987 (1987-02-13) & JP 61 211121 A (NIPPON DENSO CO LTD), 19 September 1986 (1986-09-19)
- PATENT ABSTRACTS OF JAPAN vol. 010, no. 073 (M-463), 22 March 1986 (1986-03-22) & JP 60 215417 A (FUJI JUKOGYO KK), 28 October 1985 (1985-10-28)

## Description

The invention relates to a vehicle having at least two load compartments, which comprises a refrigeration system for refrigerating said load compartments by operating a vapour compression cycle, which refrigeration system comprises a compressor, a condenser and at least two evaporators, which are incorporated in a closed circuit for a refrigerant, as well as a motor which drives the compressor, wherein the evaporators are each disposed in a respective load compartment. It is noted that the term "vehicle" as used within the framework of the present invention is to be understood to include vessels and aircraft, whilst the term "refrigerating" is to be understood to mean freezing as well.

A vehicle of this kind is generally known. The operating principle of a vapour compression cycle is as follows: the pressure and the temperature of the vapour of the refrigerant is increased by the compressor before the refrigerant enters the condenser, where it is cooled and condensed and gives up heat to the atmosphere outside the space to be refrigerated. The high pressure of the fluid is then throttled to evaporator pressure and temperature by means of an expansion valve. Inside the evaporator, the fluid expands and evaporates while absorbing heat from the space to be refrigerated. The vapour at the outlet of the evaporator is supplied to the compressor, thus completing the cycle.

Frequently, two different temperatures must be maintained in the two load compartments of a vehicle as referred to in the introduction, for example 0 °C (cooling) and -20° (freezing). One drawback of the known vehicle is that the refrigerant absorbs more oil in the freezing compartment than in the cooling compartment, so that more oil is present in the "freezing" evaporator than in the "cooling" evaporator. As long as the system is in operation, the total amount of oil that is present is geared thereto and no problems will occur. As soon as the freezing space has reached the adjusted temperature, however, the evaporator present therein will be turned off, whilst the other evaporator may still be in operation. As a result, the oil from the "freezing" evaporator will not flow back to the compressor to perform its lubricating function. When the total amount of oil is low, this may cause the compressor to seize.

A prior art solution to this problem is to add extra oil to the system. One drawback of this prior art solution, however, is the fact that there is a risk that the compressor will start to compress oil rather than gas, a phenomenon which is also called "slugging".

Another drawback of the prior art vehicle is that the humidity of the air inside the load compartments will rise to a relatively high level due to frequent opening of the loading door and/or to the introduction of warm, moist loads, causing the evaporators to ice up quickly. The ice must be removed periodically, which can be done by using electrical defrosting means or as a rule by reversing the mass flow in the evaporator in question, as a result of which the evaporator is heated temporarily. It must be possible for the other evaporator to continue to operate during said defrosting, of course. The removal of ice from the evaporators independently of each other by means of the latter method is a complex matter, therefore, which requires quite a few additional measures in the form of bypasses and control equipment.

The object of the invention is to overcome the above-described drawbacks of the prior art, and in particular to provide a vehicle comprising load compartments and being fitted with a refrigeration system for refrigerating said load compartments, wherein said system responds in a stable manner to large temperature differences and temperature fluctuations in the load compartments to be refrigerated and to icing up of the evaporators, without this having adverse effects on the overall condition and operation of the refrigeration system.

In order to accomplish that objective, a vehicle of the kind referred to in the introduction is characterized in that the refrigeration system comprises at least two separate closed circuits for the refrigerant for maintaining two different temperatures in said load compartments of the vehicle, wherein each circuit includes a separate evaporator, a separate compressor and a separate condenser, wherein the circuits include control means for regulating the mass flow of refrigerant to the respective evaporators, said control means including measuring means which are capable of measuring at least one refrigeration process parameter, and wherein the control means are capable of regulating the mass flow of the refrigerant to the individual evaporators in dependence on the measured refrigeration process parameter. The at least one refrigeration process parameter is, for example, the (average) temperature in the load compartment. The invention makes it possible to adapt the capacity of the plant as a whole as well as that of the individual evaporators to the prevailing conditions, thereby ensuring a continuous operation of the plant.

Preferably, the load compartments extend substantially in the longitudinal direction of the vehicle, so that loading and unloading of the load compartments can take place in a simple manner from the rear side of the vehicle.

Preferably, the load compartments are separated from each other by a partitioning wall, so that each load compartment can be refrigerated to its own individual temperature.

In another embodiment the partitioning wall can be removed or the load compartments jointly form a connected loading space. In the latter case the load compartments form imaginary compartments in the overall loading space. The arrangement comprising separate circuits constitutes a special advantage thereby, as it makes it possible to adapt the refrigerating capacity of the loading space to the prevailing conditions in a very flexible manner.

Preferably, at least two system components comprising the motor, the compressors, the condensers and the evaporators are accommodated in a common housing. This enables a compact, cost-efficient production and installation of the refrigeration system.

In one embodiment the measuring means comprise a clock, wherein the measured refrigeration process parameter comprises the time during which the refrigeration system is in operation, or the measuring means comprise ice detection means which are capable of detecting the presence of ice on the individual evaporators, and wherein the measured refrigeration process parameter comprises the detected icing up. The evaporators are preferably fitted with defrosting means, preferably electric defrosting means, which are controlled by said ice detection means and/or by said clock.

Preferably, the control means are capable of reversing the mass flow in one of the closed circuits periodically or in dependence on the detected presence of ice so as to remove the ice from the evaporator.

The invention also relates to a refrigeration system which is evidently suitable for use in a vehicle according to the invention.

The invention furthermore relates to a method for refrigerating at least two load compartments of a vehicle by operating a vapour compression cycle, wherein a refrigerant is led through a closed circuit comprising a compressor, a condenser and at least two evaporators, wherein the compressor is driven by a motor and wherein the evaporators are each disposed in a respective load compartment, characterized in that the refrigerant is led through at least two mutually separated closed circuits for maintaining two different temperatures in said load compartments of the vehicle, wherein each circuit includes a separate evaporator, a separate compressor and a separate condenser.

US patent publication no. 5,389,035 (Ishida) discloses a railway vehicle comprising two air conditioning systems 1 and 2, each equipped with its own first conduits for air supply, second conduits for return air, third conduits for air discharge, air conditioning means and ventilating means having an axial fan, in order to be able to condition the air with compartments in the form of a smoking-permitted room and an inhibited room, said rooms being separated from each other through an insulating wall. The difference between this known prior art and the invention is that the invention maintains two different temperatures in said compartments.

The invention will now be explained in more detail with reference to figures illustrated in a drawing, wherein:
- Figure 1 is a schematic diagram showing the physical principle of the present refrigeration system;
- Figure 2 is a schematic representation of a refrigeration system according to the prior art; and
- Figure 3 is a schematic representation of a refrigeration system according to the invention.

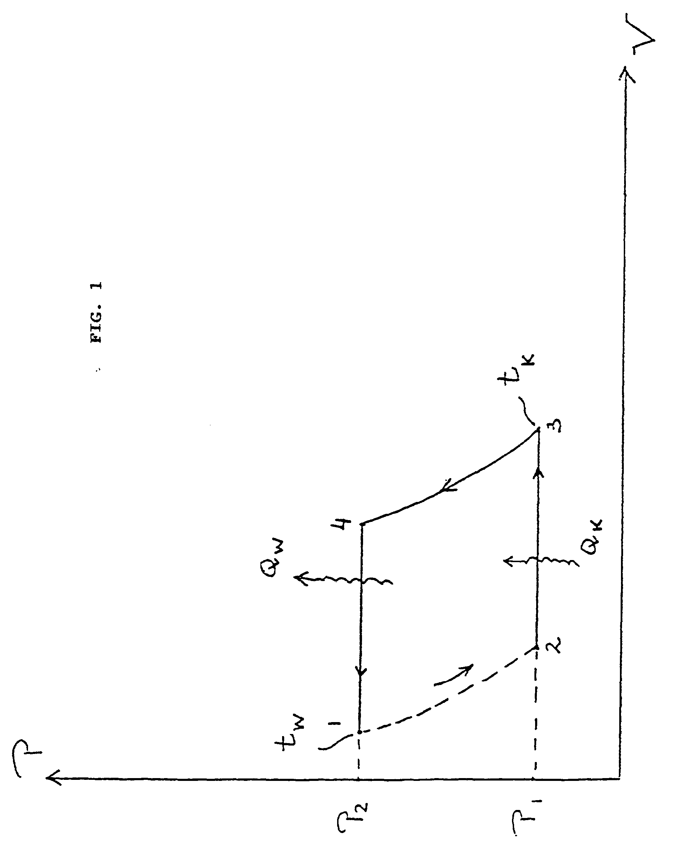

The schematic diagram of Figure 1 shows the path of a constant mass of refrigerant as being transported, at a temperature and a pressure associated with the condenser, through the expansion valve, through the evaporator, to the compressor and finally back to the condenser. Starting from point 1 in the diagram, which corresponds to the condition of the saturated fluid at the temperature and the pressure of the condenser, the refrigeration system comprises the following processes:

| | | |
|---|---|---|
| 1 | 2 | A throttling process comprising a pressure and temperature drop. The conditions between the original and the final condition of the fluid during a throttling process cannot be described by means of thermodynamic coordinates relating to the refrigeration system as a whole, and consequently they cannot be represented at points in the PV-diagram. All this is now illustrated in a dotted line between 1 and 2. |
| | | |
| 2 | 3 | Isothermal, isobaric evaporation, wherein heat Qₖ is absorbed by the refrigerant at a low temperature Tₖ, thus refrigerating the loading space. |
| | | |
| 3 | 4 | Adiabatic compression of the vapour to a temperature higher than that of the condenser T_{w} |
| | | |
| 4 | 1 | Isobaric refrigeration and condensation at a temperature T_{w}. |

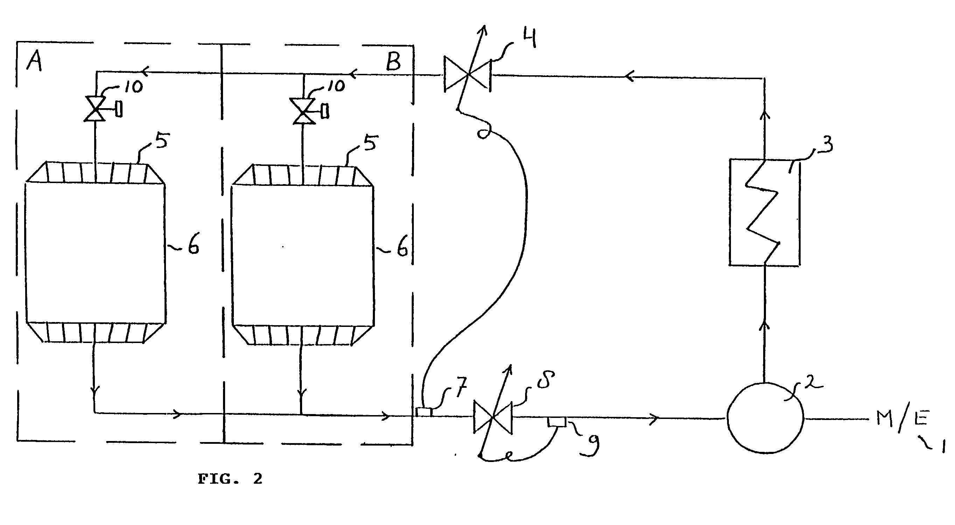

Figure 2 shows a conventional, compact refrigeration system according to the prior art for cooling (at approximately O° Celsius) or freezing (at approximately -20° Celsius) of load compartments A and B of a truck. The refrigeration system comprises a compressor 2 driven by the engine of the truck, by a separate diesel engine or by an electric driving unit 1, a condenser 3, an expansion valve 4, a distributor 5 and two evaporators 6. Furthermore a temperature sensor 7 connected to the expansion valve is provided, as well as a starting regulator 8 connected to a pressure sensor 9.

The pressure and the temperature of the gaseous refrigerant are increased by compressor 2, after which the refrigerant enters the condenser 3, where it condenses and gives up heat to the atmosphere outside the load compartments to be refrigerated. The fluid under high pressure is then throttled to the desired evaporation pressure and temperature by the expansion valve 4, depending on the temperature conditions (measured by the temperature sensor 7) upon exiting evaporators 6. The mass flow to the two evaporators is controlled by means of valves 10, which are connected to thermostats in the respective load compartments. When the mass flow to the two evaporators 6 is shut off, the motor 1 will be turned off. The refrigerant enters the evaporators 6 via distributors 5 and expands and evaporates there, whereby it absorbs heat from the surrounding atmosphere in the load compartment to be refrigerated. The refrigerant, which is gaseous now, is led back to the compressor via starting regulator 8, thus completing the circuit.

Starting regulator 8 functions to regulate the refrigerating capacity when the refrigeration system is being overloaded, for example when new, relatively hot loads are introduced into the compartment, or when the doors of the load compartment remain open for a prolonged period of time. This manifests itself in an excessive pressure at the inlet of compressor 2, as a result of which the capacity required of the compressor 2 will be too high. The excessive pressure is registered by the pressure sensor 9, which drives the starting regulator 8 to throttle the through-flow of refrigerating gas. A simpler alternative, which is also used frequently, is to use a restriction which does not allow more gas to pass than a preset (maximum) amount.

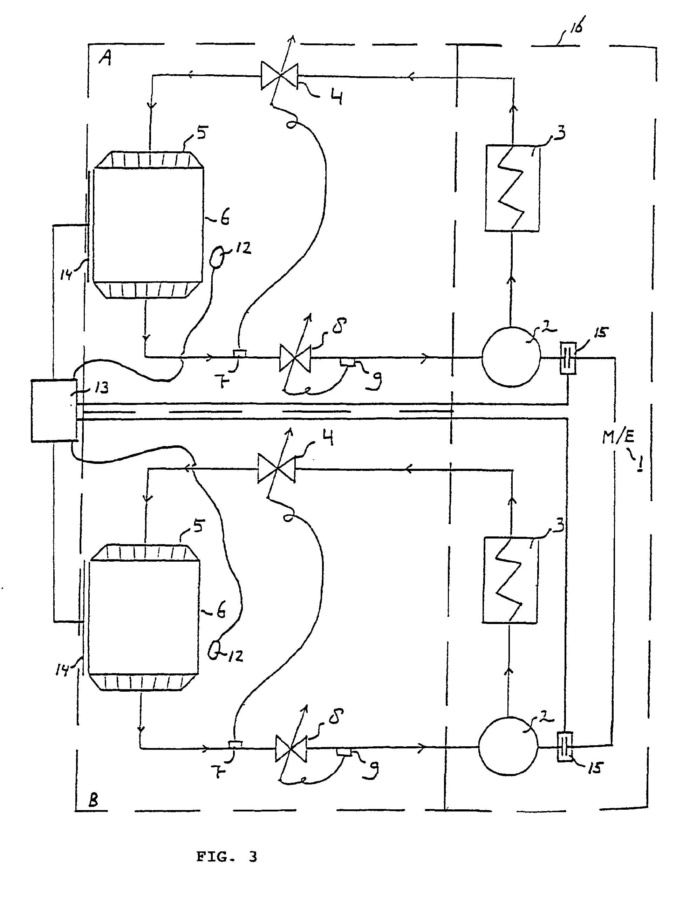

Referring to Figure 3, two separate circuits are used according to the invention, one for each of the load compartments A and B, each comprising a compressor 2, a condenser 3 and an evaporator 6. In the preferred embodiment, both circuits are driven by one common motor 1, for example the engine of the vehicle itself, but it is also possible for each circuit to have its own motor 1. The evaporators 6 in the respective load compartments A and B are fitted with ice detection means 12, which are connected to a control unit 13. Ice detection means may be in the form of pressure difference gauges, which measure the pressure difference between the air intake and the air exhaust of the air flow past the evaporator. The icing impedes the air flow past the evaporator, which is generated by means of a fan, so that a measurable difference in air pressure is created. Instead of using ice detection means, it is also possible to use a time switch, which activates the defrosting process at predetermined points in time. When the presence of ice on one of the evaporators 6 is detected, or when the predetermined period of time has elapsed, control unit 13 can activate electrical defrosting means 6 associated with the evaporator 6 in question. At the same time, or independently thereof, the control unit 13 can disconnect the compressor 2 associated with the evaporator in question from motor 1 by means of electromagnetic connecting means 15, or even reverse the direction of the mass flow by means of a valve assembly (not shown) in order to effect speedy defrosting of the evaporator 6 in question, whilst the other refrigerating circuit remains in operation. Connecting means 15 are also controlled by thermostats in the respective load compartments A and B, which will cut off the circuit in question when the desired temperature is reached.

In the preferred embodiment, motor 1, compressors 2 and condensers 3 are jointly placed in one housing 16.

It is noted that when the partitioning wall between the two compartments A and B is removed, both evaporators 6 will be available for refrigerating the one compartment thus formed. The advantage of this is that a better control of the capacity of the refrigeration system is made possible not only by throttling the mass flow, but also by the selective activation of both circuits. In practice the controlling of the capacity merely by throttling has appeared to be highly problematic in the strongly varying conditions of a transport load compartment. The additional possibility of connecting or disconnecting an additional refrigerating circuit has major advantages in that case.

## Claims

1. A vehicle having at least two load compartments, which comprises a refrigeration system for refrigerating said load compartments by operating a vapour compression cycle, which refrigeration system comprises a compressor, a condenser and at least two evaporators, which are incorporated in a closed circuit for a refrigerant, as well as a motor which drives the compressor, wherein the evaporators are each disposed in a respective load compartment, **characterized in that** the refrigeration system comprises at least two separate closed circuits for the refrigerant for maintaining two different temperatures in said load compartments of the vehicle, wherein each circuit includes a separate evaporator, a separate compressor and a separate condenser, wherein the circuits include control means for regulating the mass flow of refrigerant to the respective evaporators, said control means including measuring means which are capable of measuring at least one refrigeration process parameter, and wherein the control means are capable of regulating the mass flow of the refrigerant to the individual evaporators in dependence on the measured refrigeration process parameter.

2. A vehicle according to claim 1, wherein the load compartments extend substantially in the longitudinal direction of the vehicle.

3. A vehicle according to claim 1 or 2, wherein the load compartments are separated from each other by a partitioning wall

4. A vehicle according to claim 1, 2 or 3, wherein said partitioning wall can be removed.

5. A vehicle according to any one of the preceding claims 1 - 4, wherein the load compartments jointly form a connected loading space.

6. A vehicle according to any one of the preceding claims 1 - 5, wherein at least two system components comprising the motor, the compressors, the condensers and the evaporators are accommodated in a common housing.

7. A vehicle according to claim 5 or 6, wherein said refrigeration process parameter comprises the temperature in the load compartment.

8. A vehicle according to claim 7, wherein the measuring means comprise a clock, and wherein the measured refrigeration process parameter comprises the time during which the refrigeration system is in operation.

9. A vehicle according to claim 7 or 8, wherein the measuring means comprise ice detection means which are capable of detecting the presence of ice on the individual evaporators, and wherein the measured refrigeration process parameter comprises the detected icing up.

10. A vehicle according to any one of the claims 8 or 9, wherein the evaporators are fitted with defrosting means, preferably electric defrosting means, which are controlled by said clock and/or by said ice detection means.

11. A vehicle according to any one of the claims 8, 9 or 10, wherein said control means are capable of reversing the mass flow in a closed circuit.

12. A refrigeration system suitable for use in a vehicle according to any one of the preceding claims 1 - 11.

13. A method for refrigerating at least two load compartments of a vehicle by operating a vapour compression cycle, wherein a refrigerant is led through a closed circuit comprising a compressor, a condenser and at least two evaporators, wherein the compressor is driven by a motor and wherein the evaporators are each disposed in a respective load compartment, **characterized in that** the refrigerant is led through at least two mutually separated closed circuits for maintaining two different temperatures in said load compartments of the vehicle, wherein each circuit includes a separate evaporator, a separate compressor and a separate condenser.

## Patentansprüche

1. Fahrzeug mit mindestens zwei Laderäumen, das ein Kühlsystem zur Kühlung der Laderäume durch Fahren eines Dampfkompressionskälteprozesses umfaßt, wobei das Kühlsystem einen Kompressor, einen Kondensator und mindestens zwei Verdampfer, die in einen geschlossenen Kreislauf für ein Kältemittel eingebaut sind, sowie einen Motor umfaßt, der den Kompressor antreibt, worin die Verdampfer jeweils in einem jeweiligen Laderaum angeordnet sind, **dadurch gekennzeichnet, daß** das Kühlsystem mindestens zwei separate geschlossene Kreisläufe für das Kältemittel zur Aufrechterhaltung zweier verschiedener Temperaturen in den Laderäumen des Fahrzeugs umfaßt, worin jeder Kreislauf einen separaten Verdampfer, einen separaten Kompressor und einen separaten Kondensator enthält, worin die Kreisläufe Steuermittel zur Regelung des Massenstromes von Kältemittel zu den jeweiligen Verdampfern enthalten, wobei die Steuermittel Meßmittel enthalten, die mindestens einen Kühlprozeßparameter messen können, und worin die Steuermittel den Massenstrom des Kältemittels zu den jeweiligen Verdampfern in Abhängigkeit von dem gemessenen Kühlprozeßparameter regeln können.

2. Fahrzeug nach Anspruch 1, **dadurch gekennzeichnet, daß** sich die Laderäume im wesentlichen in der Longitudinalrichtung des Fahrzeugs erstrecken.

3. Fahrzeug nach Anspruch 1 oder 2, **dadurch gekennzeichnet, daß** die Laderäume voneinander durch eine Trennwand getrennt sind.

4. Fahrzeug nach Anspruch 1, 2 oder 3, **dadurch gekennzeichnet, daß** die Trennwand herausnehmbar ist.

5. Fahrzeug nach einem der vorangehenden Ansprüche 1 - 4, **dadurch gekennzeichnet, daß** die Laderäume gemeinsam einen verbundenen Laderaum bilden.

6. Fahrzeug nach einem der vorangehenden Ansprüche 1-5, **dadurch gekennzeichnet, daß** mindestens zwei Systemkomponenten, umfassend den Motor, die Kompressoren, die Kondensatoren und die Verdampfer, in einem gemeinsamen Gehäuse untergebracht sind.

7. Fahrzeug nach Anspruch 5 oder 6, **dadurch gekennzeichnet, daß** der Kühlprozeßparameter die Temperatur in dem Laderaum umfaßt.

8. Fahrzeug nach Anspruch 7, **dadurch gekennzeichnet, daß** die Meßmittel eine Uhr umfassen und daß der gemessene Kühlprozeßparameter die Zeit umfaßt, während derer das Kühlsystem in Betrieb ist.

9. Fahrzeug nach Anspruch 7 oder 8, **dadurch gekennzeichnet, daß** die Meßmittel Eisdetektionsmittel umfassen, die das Vorhandensein von Eis auf den einzelnen Verdampfern detektieren können, und daß der gemessene Kühlprozeßparameter das detektierte Vereisen umfaßt.

10. Fahrzeug nach einem der Ansprüche 8 oder 9, **dadurch gekennzeichnet, daß** die Verdampfer mit Defrostermitteln, vorzugsweise elektrischen Defrostermitteln, ausgestattet sind, die durch die Uhr und/oder die Eisdetektionsmittel gesteuert werden.

11. Fahrzeug nach einem Ansprüche 8, 9 oder 10, **dadurch gekennzeichnet, daß** die Steuermittel den Massenstrom in einem geschlossenen Kreislauf umdrehen können.

12. Kühlsystem, das zur Verwendung in einem Fahrzeug gemäß einem der vorangehenden Ansprüche 1 - 11 geeignet ist.

13. Verfahren zum Kühlen von mindestens zwei Laderäumen eines Fahrzeugs durch Fahren eines Dampfkompressionskälteprozesses, worin ein Kältemittel durch einen geschlossenen Kreislauf geführt wird, der einen Kompressor, einen Kondensator und mindestens zwei Verdampfer umfaßt, worin der Kompressor von einem Motor angetrieben wird und worin die Verdampfer jeweils in einem jeweiligen Laderaum angeordnet sind, **dadurch gekennzeichnet, daß** das Kältemittel durch mindestens zwei voneinander getrennte geschlossene Kreisläufe zur Aufrechterhaltung von zwei verschiedenen Temperaturen in den Laderäumen des Fahrzeugs geführt wird, worin jeder Kreislauf einen separaten Verdampfer, einen separaten Kompressor und einen separaten Kondensator enthält.

## Revendications

1. Véhicule ayant au moins deux compartiments de chargement, qui comporte un système de réfrigération destiné à réfrigérer les compartiments de chargement par mise en oeuvre d'un cycle de compression de vapeur, le système de réfrigération comprenant un compresseur, un condenseur et au moins deux évaporateurs, qui sont incorporés dans un circuit fermé de fluide réfrigérant, ainsi qu'un moteur qui entraîne le compresseur, dans lequel les évaporateurs sont disposés chacun dans un compartiment respectif de chargement, **caractérisé en ce que** le système de réfrigération comporte au moins deux circuits fermés séparés pour le fluide réfrigérant, destinés à maintenir deux températures différentes dans les compartiments de chargement du véhicule, chaque circuit comprenant un évaporateur séparé, un compresseur séparé et un condenseur séparé, et les circuits comprennent un dispositif de commande destiné à réguler le débit massique de fluide réfrigérant vers les évaporateurs respectifs, le dispositif de commande comprenant un dispositif de mesure destiné à mesurer au moins un paramètre du processus de réfrigération, et dans lequel le dispositif de commande est destiné à réguler le débit massique du fluide réfrigérant vers les évaporateurs individuels en fonction du paramètre mesuré du processus de réfrigération.

2. Véhicule selon la revendication 1, dans lequel les compartiments de chargement s'étendent pratiquement dans la direction longitudinale du véhicule.

3. Véhicule selon la revendication 1 ou 2, dans lequel les compartiments de chargement sont séparés l'un de l'autre par une paroi de cloisonnement.

4. Véhicule selon la revendication 1, 2 ou 3, dans lequel la paroi de cloisonnement peut être retirée.

5. Véhicule selon l'une quelconque des revendications précédentes 1 à 4, dans lequel les compartiments de chargement forment en coopération un espace raccordé de chargement.

6. Véhicule selon l'une quelconque des revendications précédentes 1 à 5, dans lequel deux éléments au moins du système comprenant le moteur, les compresseurs, les condenseurs et les évaporateurs, sont logés dans un boîtier commun.

7. Véhicule selon la revendication 5 ou 6, dans lequel le paramètre du processus de réfrigération est la température dans le compartiment de chargement.

8. Véhicule selon la revendication 7, dans lequel le dispositif de mesure comporte une horloge, et dans lequel le paramètre mesuré du processus de réfrigération est le temps pendant lequel le système de réfrigération est en fonctionnement.

9. Véhicule selon la revendication 7 ou 8, dans lequel le dispositif de mesure comprend un dispositif de détection de givre qui est destiné à détecter la présence de givre sur les évaporateurs individuels, et dans lequel le paramètre mesuré du processus de réfrigération est le givrage détecté.

10. Véhicule selon l'une quelconque des revendications 8 et 9, dans lequel les évaporateurs sont munis de dispositifs de dégivrage, de préférence de dispositifs électriques de dégivrage, qui sont commandés par l'horloge et/ou par le dispositif de détection de givrage.

11. Véhicule selon l'une quelconque des revendications 8, 9 et 10, dans lequel le dispositif de commande est destiné à inverser la circulation massique dans un circuit fermé.

12. Système de réfrigération destiné à être utilisé dans un véhicule selon l'une quelconque des revendications précédentes 1 à 11.

13. Procédé de réfrigération d'au moins deux compartiments de chargement d'un véhicule par mise en oeuvre d'un cycle de compression de vapeur, dans lequel un fluide réfrigérant est conduit dans un circuit fermé comprenant un compresseur, un condenseur et au moins deux évaporateurs, dans lequel le condenseur est entraîné par un moteur, et dans lequel les évaporateurs sont disposés chacun dans un compartiment respectif de chargement, **caractérisé en ce que** le fluide réfrigérant est conduit dans au moins deux circuits fermés mutuellement séparés destinés à maintenir deux températures différentes dans les compartiments de chargement du véhicule, et chaque circuit comprend un évaporateur séparé, un compresseur séparé et un condenseur séparé.
